(19) Europäisches Patentamt
European Patent Office
Office européen des brevets

(11) Veröffentlichungsnummer: **0 183 144**
**A2**

(12) # EUROPÄISCHE PATENTANMELDUNG

(21) Anmeldenummer: **85114518.5**

(22) Anmeldetag: **15.11.85**

(51) Int. Cl.$^4$: **C 08 G 63/62**

(30) Priorität: **27.11.84 DE 3443091**

(43) Veröffentlichungstag der Anmeldung:
**04.06.86 Patentblatt 86/23**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Stix, Wolfgang, Dr.**
**Freudenbergstrasse 56b**
**D-6901 Neckarsteinach(DE)**

(72) Erfinder: **Bottenbruch, Ludwig, Dr.**
**Wöhlerstrasse 5**
**D-4150 Krefeld(DE)**

(72) Erfinder: **Wehnert, Wolfgang, Dr.**
**Bodelschwinghstrasse 14**
**D-4150 Krefeld(DE)**

(54) **Polycarbonate mit Dimethylmaleinimid-Endgruppen, gegebenenfalls im Gemisch mit bekannten aromatischen Polycarbonaten, ihre Herstellung und ihre Modifizierung.**

(57) Gegenstand der vorliegenden Erfindung sind Polycarbonate mit Endgruppen der Formel (Ib)

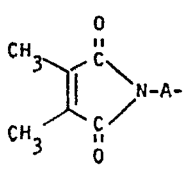

(Ib),

gegebenenfalls im Gemisch mit bekannten aromatischen Polycarbonaten, ihre Herstellung nach dem Phasengrenzflächenverfahren oder in homogener Lösung sowie ihre Modifizierung durch Bestrahlen.

EP 0 183 144 A2

Croydon Printing Company Ltd.

BAYER AKTIENGESELLSCHAFT 5090 Leverkusen, Bayerwerk
Konzernverwaltung RP
Patentabteilung PS/Em-c

# Polycarbonate mit Dimethylmaleinimid-Endgruppen, gegebenenfalls im Gemisch mit bekannten aromatischen Polycarbonaten, ihre Herstellung und ihre Modifizierung

Gegenstand der vorliegenden Erfindung ist ein Verfahren zur Herstellung von aromatischen Polycarbonaten mit Dimethylmaleinimid-Endgruppen und mit mittleren Molekulargewichten $\bar{M}w$ (Gewichtsmittel, ermittelt durch Lichtstreuung) zwischen 2000 und 100 000, vorzugsweise zwischen 5000 und 80 000, besonders bevorzugt zwischen 10 000 und 50 000, gegebenenfalls im Gemisch mit bekannten aromatischen Polycarbonaten mit $\bar{M}w$ (Gewichtsmittel, ermittelt durch Lichtstreuung) zwischen 2000 und 100 000, vorzugsweise zwischen 5000 und 80 000, besonders bevorzugt zwischen 10 000 und 50 000, aus Diphenolen, 0,5 bis 40 Mol-%, vorzugsweise 1 bis 20 Mol-%, besonders bevorzugt 2 bis 10 Mol-%, bezogen auf Mole Diphenole, Kettenabbrechern, Phosgen und gegebenenfalls Verzweigern nach den bekannten Polycarbonatherstellungsmethoden des Phasengrenzflächenverfahrens oder des Verfahrens in homogener Lösung, das dadurch gekennzeichnet ist, daß man Kettenabbrecher der Formel (I),

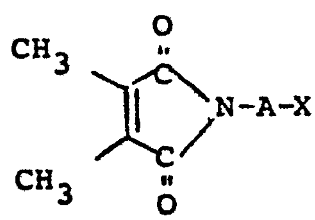

(I),

gegebenenfalls in Kombination mit maximal 3-fachen, vorzugsweise maximal gleichen Molmengen, bezogen auf Mole Kettenabbrecher (I), an anderen, bekannten Kettenabbrechern, verwendet.

In den Kettenabbrechern der Formel (I) sind die X-A-Reste X-$C_1$-$C_8$-Alkyl, X-$C_5$-$C_6$-Cycloalkyl, X-$C_7$-$C_{28}$-Aralkyl oder Reste der Formel

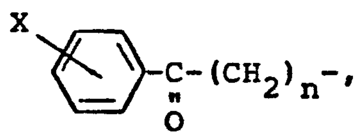

worin n eine ganze Zahl von 1 bis 8 ist und worin X- eine funktionelle Gruppe ist, die bei der Polycarbonatherstellung nach dem Zweiphasengrenzflächenverfahren oder nach dem Verfahren in homogener Phase (Pyridinverfahren) als reaktiver Teil der Kettenabbrecher der Formel (I) fungiert.

Beispielsweise kann X- $Cl-\overset{O}{\overset{\|}{C}}-$, $Br-\overset{O}{\overset{\|}{C}}-$, $HO-\overset{O}{\overset{\|}{C}}-$, $Cl-\overset{O}{\overset{\|}{C}}-O-$, $Br-\overset{O}{\overset{\|}{C}}-O-$ oder HO- sein, wobei im Falle des Zweiphasengrenzflächenverfahrens aliphatische und cycloaliphatische OH-Gruppen in reaktionsfähige und stabile Chlorkohlensäureesterendgruppen überführt werden müssen (Siehe Beispiele 3/4). Vorzugsweise ist X- $Cl-\underset{O}{\underset{\|}{C}}-$, $Cl-\underset{O}{\underset{\|}{C}}-O-$ oder HO-.

In den obengenannten X-A-Resten ist Alkyl linear oder verzweigt. Weitere Beispiele für X-A-Reste sind

$X-(CH_2)_n-$, 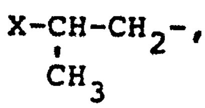, 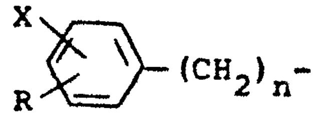 und 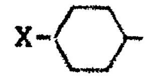,

worin R H oder $CH_3$ und "n" eine ganze Zahl von 1 bis 8 sind.

Die Kettenabbrecher der Formel (I) sind entweder bekannt (siehe beispielsweise DE-OS 2 626 795 oder DE-OS 2 934 578) oder nach bekannten Verfahren erhältlich aus Dimethylmaleinsäureanhydrid mit den entsprechenden primären Aminen gemäß folgender Reaktionsgleichung:

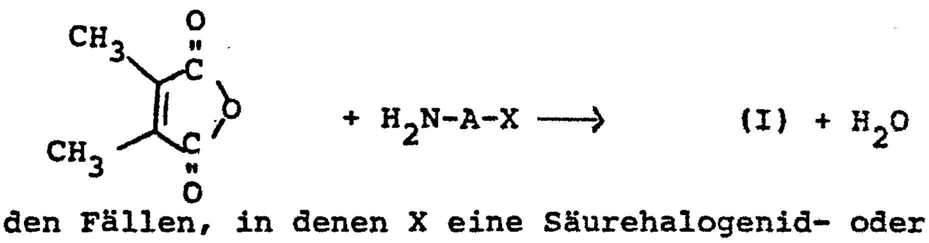

In den Fällen, in denen X eine Säurehalogenid- oder Halogenkohlensäureestergruppe ist, wird aus den entsprechenden COOH-Gruppen beziehungsweise OH-Gruppen die Umwandlung nach allgemein bekannten Verfahren durchgeführt.

Beispiele für Kettenabbrecher der Formel (I) sind

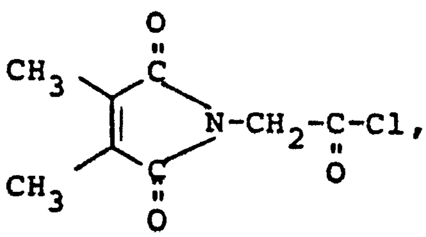 (siehe Beispiel 8)

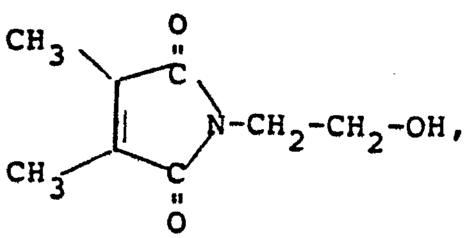 (siehe Beispiel 3a)

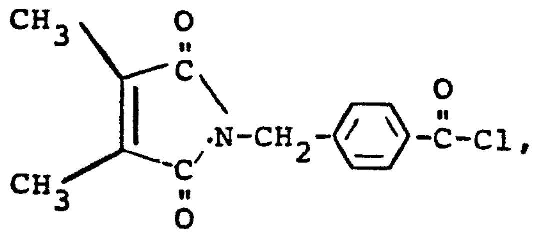 (siehe Beispiel 1)

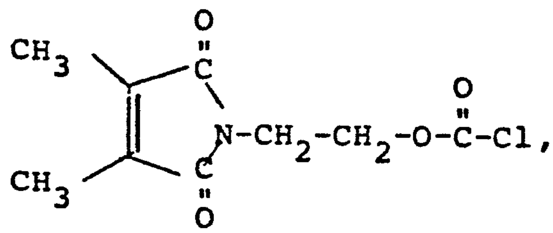 (siehe Beispiel 9)

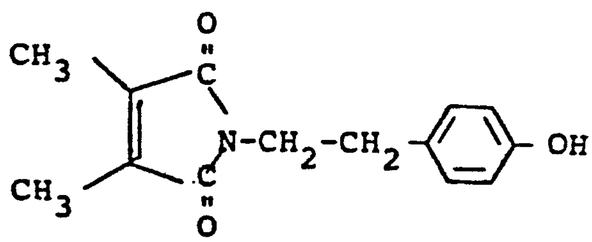 (siehe Beispiel 10)

Die für das Zweiphasengrenzflächenverfahren geeigneten Chlorkohlensäureesterendgruppen-haltigen Kettenabbrecher haben die Formel (Ia)

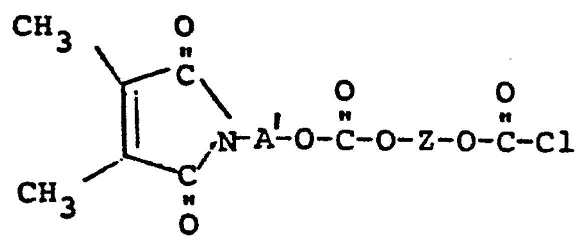

(Ia)

worin A' ein $C_2$-$C_8$-Alkylen-Rest oder $C_5$-$C_6$-Cycloalkylen-Rest ist und -O-Z-O- ein Diphenolat-Rest mit vorzugsweise 6 bis 30 C-Atomen ist.

Derartige Zwischenprodukte (Ia) sind aus den entsprechenden OH-Gruppen-haltigen Kettenabbrechern (I) mit Bishalogenkohlensäureestern von Diphenolen (III) HO-Z-OH (III) in bekannter Weise erhältlich.

Ein Beispiel für eine Verbindung der Formel (Ia) ist

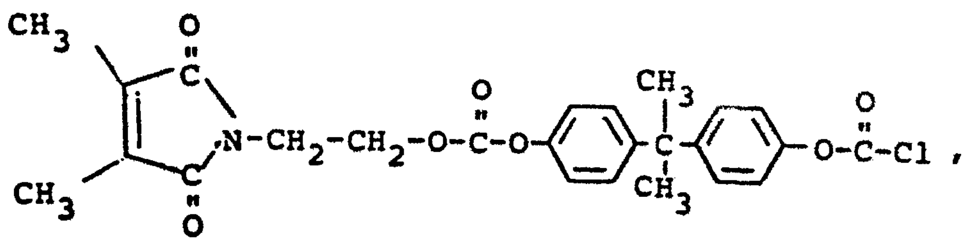

dessen Herstellung in Beispiel 3 b beschrieben ist.

Bekannte, bei dem erfindungsgemäßen Verfahren mitzuverwendende andere Kettenabbrecher sind beispielsweise Phenole, Carbonsäurehalogenide oder Chlorkohlensäureester.

Beispiele für die bekannten, mitzuverwendenden Kettenabbrecher sind Phenol, p-tert.-Butylphenol, 2,6-Dimethylphenol oder p-Isooctylphenol.

Gegenstand der vorliegenden Erfindung sind außerdem die nach dem erfindungsgemäßen Verfahren erhältlichen aro-

matischen Polycarbonate mit $\bar{M}_w$ zwischen 2000 und 100 000 mit Endgruppen der Formel (Ib)

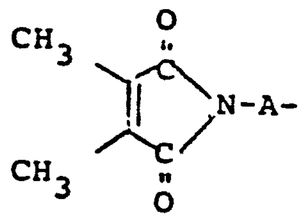

(Ib),

worin -A- die für die Formel (I) genannte Bedeutung hat, gegebenenfalls im Gemisch mit bekannten aromatischen Polycarbonaten, mit $\bar{M}w$ zwischen 2 000 und 100 000, die aus dem Kettenabbruch mit den anderen, bekannten Kettenabbrechern resultieren.

Erfindungsgemäß erhältliche aromatische Polycarbonate mit mittleren Molekulargewichten $\bar{M}w$ (Gewichtsmittel ermittelt durch Lichtstreuung) zwischen 2000 und 100 000 sind vorzugsweise solche der Formel (II)

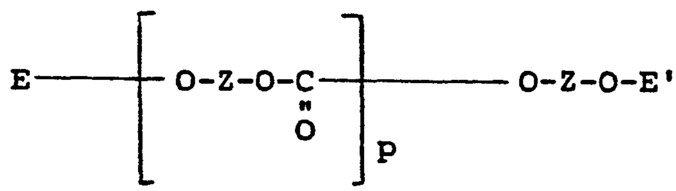

worin -O-Z-O- ein Diphenolatrest mit vorzugsweise 6 bis 30 C-Atomen ist,
E und E' gleich oder verschieden sind, und wobei jeweils mindestens einer der Reste E- oder E'- einem Rest der Formel (Ic)

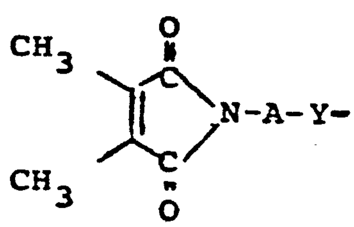

(Ic)

entspricht, worin -A- die für Formel (I) genannte Bedeutung hat und -Y- das Bindeglied ist, das aus der Reaktion der Kettenabbrecher der Formel (I), gegebenenfalls unter Einbeziehung von Phosgen, resultiert, und wobei die übrigen Endgruppen E und E' aus der Reaktion mit den anderen, bekannten Kettenabbrechern, gegebenenfalls unter Einbeziehung von Phosgen, resultieren, und wobei "p" der Polymerisationsgrad ist, der aus den Molekulargewichten $\bar{M}w$ von 2 000 bis 100 000 resultiert.

Beispiele für die Bindeglieder -Y- sind $-\overset{\overset{O}{\|}}{C}-$ und $-O-\overset{\overset{O}{\|}}{C}-$ .

Die erfindungsgemäßen Polycarbonate bzw. Polycarbonatgemische besitzen aufgrund der Maleinimid-Endgruppen die Fähigkeit, unter dem Einfluß von elektromagnetischen Wellen ihr Molekulargewicht zu erhöhen.

Thermoplastische, aromatische Polycarbonate mit ungesättigten Endgruppen sind bekannt (siehe Deutsche Offenlegungsschriften Nr. 2 746 139, 2 829 256, 2 843 154 und 2 842 004). Die Doppelbindungen dieser Polycarbonate können für bestimmte Reaktionen (Pfropfung, UV-Lichtvernetzung) genutzt werden.

Aus der DE-OS 3 232 391 sind Polycarbonate mit konjugierte Doppelbindungen enthaltenden Endgruppen bekannt, die, gegebenenfalls im Gemisch mit bekannten Polycarbonaten, durch Erwärmen auf Temperaturen zwischen 150°C und 400°C in Polycarbonate mit höherem Molekulargewicht überführt werden. Verzweigte Polycarbonate können dabei vernetzte, unlösliche Produkte geben.

Nachteilig dabei ist, daß die Polycarbonate, gemäß DE-OS 3 232 391 nur durch Erwärmen in Produkte mit höherem Molekulargewicht überführt werden können, nicht jedoch durch Lichteinwirkung, wie etwa bei atmosphärischer Bewitterung.

Aus der DE-OS 2 626 769 sind vernetzbare polymere Verbindungen bekannt. Als polymere Verbindungen sind unter anderem auch Polyester einbezogen; als vernetzende Gruppen sind Maleinimidgruppen beschrieben. Thermoplastische Polycarbonate sind jedoch nicht einbezogen. Die Maleinimidgruppen in den Polyestern sitzen außerdem nicht kettenendständig.

Für die Herstellung der erfindungsgemäßen Polycarbonate geeignete Diphenole der Formel (III)

HO-Z-OH (III)

mit vorzugsweise 6 bis 30 C-Atomen sind sowohl einkernige, als auch mehrkernige Diphenole, die Heteroatome enthalten können und unter den Bedingungen der Polycarbonatherstellung und unter dem Einfluß von elektromagnetischen Wellen inerte Substituenten haben können.

Beispielsweise seien Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -ketone, -sulfoxide, -sulfone und α,α'-Bis-(hydroxyphenyl)-diisopropylbenzole sowie deren kernalkylierte und kernhalogenierte Verbindungen genannt.

Geeignete Diphenole sind beispielsweise in den US-Patenten 3 028 365, 2 999 835, 3 062 781 und 3 148 172, in den Deutschen Offenlegungsschriften 1 570 703 und 2 063 050 sowie in der Monographie "H. Schnell, Chemistry and Physics of Polycarbonates, Interscience Publishers, New York, 1964" beschrieben.

Bevorzugte Diphenole sind

4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α'-Bis-(3,5-dimethyl-4-hydroxyphenyl)-p-diisopropylbenzol
2,2-Bis-(3,5-dichlor-4-hydroxyphenyl)-propan
2,2-Bis-(3,5-dibrom-4-hydroxyphenyl)-propan.

Besonders bevorzugte Diphenole sind z.B.:

2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan

2,2-Bis-(3,5-dibrom-4-hydroxyphenyl)-propan
1,1-Bis-(4-hydroxyphenyl)-cyclohexan.

Es können auch beliebige Mischungen der vorgenannten Diphenole verwendet werden.

Neben den genannten monomeren Diphenolen können zur Darstellung von Blockcopolycarbonaten mit den erfindungsgemäßen Endgruppen auch Oligomere oder Polymere mitverwendet werden, die zwei unter den Bedingungen der Polycarbonatsynthese zur Aufbaureaktion befähigte Endgruppen tragen. Solche Endgruppen sind z.B. phenolische OH-Gruppen, Chlorkohlensäureestergruppen und Carbonsäurechloridgruppen. Vorgefertigte oligomere oder polymere Blöcke, die die genannten reaktiven Gruppen infolge der Art ihrer Herstellung bereits tragen oder bei denen man solche Gruppen durch eine geeignete Nachbehandlung erzeugen kann, sind z.B. Polysiloxane, Polykondensate auf der Basis von aliphatischen Diolen und gesättigten aliphatischen oder aromatischen Dicarbonsäuren, wie beispielsweise gesättigte, aliphatische Polyester auf der Basis von hydrierter Dimerfettsäure, aromatische Polyethersulfone und aliphatische Polyether.

Derartige cokondensierbare, bifunktionelle Oligomere oder Polymere können Molekulargewichte $\bar{M}n$ (Zahlenmittel bestimmt durch Dampfdruckosmose) zwischen etwa 500 und etwa 10 000 haben und werden in solchen Mengen eingesetzt, daß die resultierenden erfindungsgemäßen, ungesättigte Endgruppen enthaltenden Polycarbonate bis zu 80 Gew.-%, vorzugsweise zwischen 2 und 20 Gew.-%, davon enthalten.

Gegenstand der vorliegenden Erfindung ist somit auch die Modifizierung des erfindungsgemäßen Herstellungsverfahrens, das dadurch gekennzeichnet ist, daß man unter den Polycarbonatherstellungsbedingungen cokondensierbare bifunktionelle Oligomere oder Polymere mit Molekulargewichten $\bar{M}n$ (Zahlenmittel) zwischen 500 und 10 000 in Mengen bis zu 450 Gew.-%, vorzugsweise zwischen etwa 3 Gew.-% und 30 Gew.-%, bezogen auf Gewichtsmenge an eingesetzten monomeren Diphenolen, mitverwendet.

Gegenstand der vorliegenden Erfindung sind somit auch die nach diesem modifizierten, erfindungsgemäßen Verfahren erhältlichen aromatischen segmentierten Polycarbonate mit Endgruppen der Formel (Ib), gegebenenfalls im Gemisch mit bekannten aromatischen segmentierten Polycarbonaten, die aus dem Kettenabbruch mit den anderen, bekannten Kettenabbrechern resultieren.

Zwecks Verbesserung des Fließverhaltens können auch geringe Mengen, vorzugsweise Mengen zwischen 0,05 und 2,0 Mol-% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise mitverwendet werden. Bei Mitverwendung solcher mehr als bifunktioneller Verbindungen werden die erfindungsgemäßen Endgruppen vorzugsweise in Mischung mit den anderen, bekannten Kettenabbrechern eingesetzt, besonders bevorzugt in solcher Menge, daß der mittlere Gehalt an erfindungsgemäßen Endgruppen im Polycarbonat maximal 2 Mol pro Mol Polycarbonat beträgt. Dadurch wird sichergestellt, daß die Polycarbonate während der Belichtung nicht vernetzen und somit ihre gute Zähigkeit nicht verlieren.

Einige der verwendbaren Verbindungen mit drei oder mehr als drei phenclischen Hydroxylgruppen sind beispielsweise 1.3.5-Tri-(4-hydroxyphenyl)-benzol, 1.1.1-Tri-(4-hydroxyphenyl)-ethan, 2.6-Bis-(2-hydroxy-5-methyl-benzyl)-4-methylphenol, 2-(4-Hydroxyphenyl)-2-(2.4-dihydroxyphenyl)-propan, Hexa-(4-(2-(4-hydroxyphenyl)-prop-2-yl)-phenyl)-ortho-terephthalsäureester, Tetra-(4-hydroxyphenyl)-methan und 1.4-Bis-(4'.4"- dihydroxytriphenyl)-methyl)-benzol. Einige der sonstigen dreifunktionellen Verbindungen sind 2.4-Dihydroxybenzoesäure, Trimesinsäure, Cyanurchlorid und 3.3-Bis-(4-hydroxy-3-methyl-phenyl)-2-oxo-2.3-dihydro-indol.

Die Herstellung der erfindungsgemäßen Polycarbonate bzw. Polycarbonatgemische kann im wesentlichen nach folgenden zwei bekannten Methoden (vgl. H. Schnell, "Chemistry and Physics of Polycarbonates", Polymer Reviews, Vol. IX, Seite 27 ff., Interscience Publ. 1964) erfolgen:

1. Nach dem Lösungsverfahren in disperser Phase (sogenanntes Zweiphasengrenzflächen-Verfahren):

   Hierbei werden die einzusetzenden Diphenole in wäßriger alkalischer Phase gelöst. Dazu werden die zur Herstellung der erfindungsgemäßen Polycarbonate erforderlichen Kettenabbrecher in Mengen von 0,5 - 40,0 Mol-%, bezogen auf Mole Diphenol, in einem organischen Lösungsmittel gelöst oder in Substanz, zugegeben. Dann wird in Gegenwart einer inerten, vorzugsweise Polycarbonat-lösenden, organischen Phase mit Phosgen umgesetzt. Die Reaktionstemperatur liegt zwischen 0°C bis 40°C.

Um den Umsatz der Polykondensation und damit auch den Polymerisationsgrad des resultierenden Produkts zu erhöhen, kann ein im Verlauf der Umsetzung abgesunkener pH-Wert durch Zugabe von weiterem Alkali wieder angehoben werden.

Die Zugabe der erforderlichen Kettenabbrecher, in Art und Menge wie oben angegeben, kann auch während der Phosgenierung erfolgen.

Geeignete organische Lösungsmittel für die Kettenabbrecher sind beispielsweise Methylenchlorid, Chlorbenzol, Mischungen aus Methylenchlorid und Chlorbenzol, Aceton, Acetonitril, Toluol.

Die Reaktion kann durch Katalysatoren wie Tributylamin oder Triethylamin begünstigt werden. Um den Einbau des Kettenabbrechers zu begünstigen, können auch Oniumsalze, wie etwa Tetraalkylammoniumhalogenide als Phasentransferkatalysatoren mitverwendet werden.

Werden Verzweiger bzw. cokondensierbare bifunktionelle Oligomere oder Polymere mitverwendet, so kann deren Zugabe vor der Umsetzung mit Phosgen oder während der Phosgenierung erfolgen.

Neben oder anstelle der Diphenole können auch deren Chlorkohlensäureester eingesetzt werden.

Darüber hinaus müssen aliphatische und cycloaliphatische OH-Gruppen von Kettenabbrechern der Formel (I) im Falle des Zweiphasengrenzflächenverfahrens in Chlorkohlensäureesterendgruppen übergeführt werden, beispielsweise durch Vorabreaktion mit einem Bischlorkohlensäureester eines Diphenols (siehe Beispiele 3/4).

2. Nach dem Lösungsverfahren in homogener Phase (auch Pyridin-Verfahren genannt):

Hierbei werden die Diphenole in organischen Basen wie Pyridin gelöst, gegebenenfalls unter Zusatz weiterer organischer Lösungsmittel; dann werden, wie unter 1. beschrieben, die zur Herstellung der erfindungsgemäßen Polycarbonate erforderlichen Kettenabbrecher in Mengen von 0,5 - 40 Mol-%, bezogen auf Mol Diphenol, bei Raumtemperatur zugegeben.

Dann wird mit Phosgen umgesetzt. Die Reaktionstemperatur liegt zwischen 0°C und 40°C. Geeignete organische Basen außer Pyridin sind z.B. Triethylamin, Tributylamin; geeignete Lösungsmittel sind beispielsweise Methylenchlorid, Chlorbenzol, Toluol oder Gemische aus Methylenchlorid und Chlorbenzol oder Toluol.

Bei der Mitverwendung von Verzweigern bzw. cokondensierbaren bifunktionellen Oligomeren wird wie unter 1. beschrieben verfahren.

Neben den Diphenolen können auch bis zu 50 Mol-%, bezogen auf die eingesetzten Diphenole, von deren Bischlorkohlensäureestern eingesetzt werden.

Die Isolierung der erfindungsgemäßen Polycarbonate erfolgt bei den Verfahrensvarianten 1 und 2 in bekannter Weise. Geeignete Aufarbeitungsverfahren sind insbesondere das Ausfällen, die Sprühtrocknung und das Verdampfen des Lösungsmittels im Vakuum.

Die Formgebung der erfindungsgemäß erhältlichen Polycarbonate beziehungsweise Polycarbonatgemische kann durch thermoplastische Verarbeitungsverfahren, z. B. durch Extrusion oder Spritzgießen, sowie durch das Eindampfen von Polymerlösungen, z. B. beim Folien-Gießverfahren, erfolgen.

Das Bestrahlen der erfindungsgemäß erhältlichen Polycarbonate beziehungsweise Polycarbonatgemische erfolgt entweder nach der Formgebung an Formkörpern oder in Lösungen, welche anschließend zu Folien vergossen werden können. Die Bestrahlung wird durchgeführt, indem man entweder eine solche Lösung mit einer Tauchlampe bestrahlt, z. B. eine 10 %ige Polycarbonat-Lösung in Methylenchlorid mit einer Quecksilbertauchlampe, oder aber Fasern, Folien oder Formteile mit einer UV-Lampe bestrahlt.

Die resultierenden Polycarbonate sind, ausgehend von linearen Produkten, jeweils noch in Polycarbonatlösungsmitteln lösliche Thermoplaste; ausgehend von verzweigten Verbindungen sind die entstehenden Polymeren ebenfalls löslich, wenn man verzweigte Produkte mit einem mittleren Gehalt von höchstens 2,0 erfindungsgemäßen Endgruppen pro Polymermolekül bestrahlt.

Zur Beschleunigung des Molekulargewichtsaufbaus der lichtempfindlichen Polymeren können die erfindungsgemäßen Harze bekannte Sensibilisatoren in den üblichen Mengen enthalten. Beispiele für Sensibilisatoren sind Acetophenon, Benzaldehyd, Benzophenon, Diphenyl, Benzil, Fluorenon und Fluoren.

Zusätzlich sei noch vermerkt, daß der Molekulargewichtsaufbau auch durch Bestrahlen mit Licht erfolgt, dessen Wellenlänge größer 400 nm ist, also im sichtbaren Bereich liegt, so daß die Polymeren auch unter den Bedingungen der natürlichen Bewitterung ständig ihr Molekulargewicht erhöhen, wobei auch die Anwesenheit von UV-Absorbern dies nicht unterbindet.

Gegenstand der vorliegenden Erfindung ist somit auch ein Verfahren zur Modifizierung der erfindungsgemäß erhältlichen Polycarbonate mit Endgruppen der Formel (Ib), die UV-Absorber enthalten können, gegebenenfalls im Gemisch mit bekannten aromatischen Polycarbonaten, das dadurch gekennzeichnet ist, daß man diese mit ultraviolettem bzw. mit sichtbarem Licht bestrahlt, beispielsweise der natürlichen Bewitterung durch Sonnenlicht aussetzt.

Den erfindungsgemäß erhältlichen Polycarbonaten mit Endgruppen der Formel (Ib), gegebenenfalls im Gemisch mit bekannten aromatischen Polycarbonaten, können außer

oder anstelle von UV-Stabilisatoren andere in der Polycarbonatchemie übliche Additive wie Gleitmittel, Entformungsmittel, Stabilisatoren gegen Hitze, Feuchtigkeit, Füllstoffe, Verstärkungsstoffe, Flammschutzmittel, Farbstoffe, Pigmente und/oder Schlagzähmodifikatoren vor oder während der Formgebung der Polycarbonate in den üblichen Mengen zugesetzt werden. Hierbei können an Füllstoffen oder Verstärkungsstoffen beispielsweise 10 bis 50 Gew.-%, bezogen auf das Gesamtgewicht der Formmasse, an Glasfasern, Glaskugeln, Glimmer, Silikate, Feldspat, Quarz, $TiO_2$ oder/und Wollastonit eingesetzt werden.

In den Fällen, in denen die erfindungsgemäß erhältlichen Polycarbonate mit Endgruppen der Formel (Ib) Füllstoffe, Verstärkungsstoffe, Pigmente oder kautschukelastische Pfropfcopolymerisate als Schlagzähmodifikatoren zugesetzt enthalten, ist der Lichteinfluß vor allem bei dicken Formkörpern reduziert; trotzdem werden auch in diesen Fällen durch oberflächlichen Molekulargewichtsaufbau die Formkörper stabilisiert, beispielsweise gegen Chemikalien oder gegen Wasserdampf.

Durch das Bestrahlen von Lösungen der erfindungsgemäß erhältlichen Polycarbonate mit Endgruppen der Formel (Ib) können Lösungen von sehr hochmolekularen Polycarbonaten hergestellt werden, aus denen Gießfolien für Elektroisolierzwecke erhalten werden können. Bislang mußten derartige hochmolekulare Polycarbonate wegen der sehr hohen Viskosität ihrer Lösungen in speziellen Apparaturen hergestellt werden. Jetzt kann man von Polycarbonaten ausgehen, die

in üblichen Anlagen für das Phasengrenzflächenverfahren erhalten werden, und deren Lösungen nach der üblichen Isolierung und Reinigung dann durch Bestrahlen gemäß vorliegender Erfindung in einfacher Weise weiterbehandelt werden können.

Die erfindungsgemäß erhältlichen Polycarbonate beziehungsweise Polycarbonatgemische können vor oder nach Bestrahlung als Formkörper, insbesondere als Folien, überall dort eingesetzt werden, wo sie Bestrahlung ausgesetzt sind wie dem Sonnenlicht bei der Bewitterung.

Dies ist beispielsweise der Fall bei außenliegenden Teilen im Bau- und Automobilsektor, insbesondere bei glasklaren Formkörpern und Folien.

Beispielhaft sei die Verscheibung mit Hohlkammerplatten bei Gewächshäusern genannt. Die erfindungsgemäß erhältlichen Polycarbonate beziehungsweise Polycarbonatgemische können insbesondere dort eingesetzt werden, wo die Verarbeitung niedrigviskoser Typen zweckmäßig ist, also beispielsweise zur Herstellung dünnwandiger Formteile, sofern diese nachfolgend bestrahlt werden können.

Beispiele

1. Herstellung von

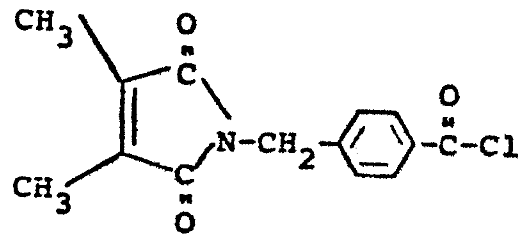

In einem Kolben mit Kühler, Rührer, Tropftrichter und Stickstoffeinleitung werden unter Stickstoff 151 g (1 Mol) 4-(Aminomethyl)-benzoesäure, 126 g (1 Mol) Dimethylmaleinsäureanhydrid und 600 ml Eisessig auf Rückflußtemperatur erwärmt und 2 Stunden gehalten. Anschließend wird der Eisessig weitgehend abdestilliert und die erhaltene Masse zweimal aus Methanol umkristallisiert.

103 g (0,4 Mol) des erhaltenen Produktes werden in einem Liter Thionylchlorid unter Eiskühlung gelöst und langsam auf Rückflußtemperatur erwärmt. Man hält die Temperatur 2 Stunden, destilliert dann das überschüssige Thionylchlorid ab, verdünnt mit 500 ml Toluol und destilliert das Toluol ab. Nach dem Umkristallisieren in Cyclohexan erhält man 115 g des Produktes mit einem Schmelzpunkt von 116°C.

2. Herstellung und Prüfung eines aromatischen Polycarbonats

Aus 45,7 g 2,2-Bis-(4-hydroxyphenyl)-propan (Bisphenol A)

(0,2 Mol), 16 g Natriumhydroxid (0,4 Mol) und 680 ml destilliertem Wasser wird eine Lösung hergestellt. Nach Zugabe von 370 ml Methylenchlorid werden bei 20 bis 25°C unter Rühren 32 g (0,32 Mol) Phosgen eingeleitet. Während der Phosgenierung werden 2,5 g (0,009 Mol) des Säurechlorids aus Beispiel 1 auf einmal zugegeben. Der pH-Wert wird durch die Zugabe von 20 ml 45 %iger wäßriger Natriumhydroxidlösung auf pH 12 gehalten. Nach beendeter Phosgenierung wird der pH-Wert durch Zugabe von weiteren 20 ml 45 %iger Natriumhydroxidlösung auf pH 13 - 14 angehoben, 4 ml wäßrige Triethylaminlösung zugefügt und weitere 45 Minuten gerührt. Die obere wäßrige Phase wird abgetrennt, die organische Phase angesäuert und elektrolytfrei gewaschen.

Die Methylenchloridlösung wird eingeengt und das Produkt bei 80°C 12 Stunden im Vakuumtrockenschrank getrocknet.

Das Produkt hatte eine relative Lösungsviskosität von 1,314 (gemessen an 5 g/l in Methylenchlorid bei 25°C).

Aus diesem Material wurde ein ca. 0,1 mm dicker Film gegossen und mit einer Schwarzlichtlampe Typ Philips TL 6 W/08 bestrahlt.

Ergebnis ($\eta$ rel wie vorstehend gemessen):

| Zeit / h | $\eta$ rel |
|---|---|
| 0 | 1,314 |
| 24 | 1,533 |
| 48 | 1,601 |
| 72 | 1,760 |
| 120 | 1,915 |
| 168 | 2,009 |

Man erkennt den deutlichen Molekulargewichtsanstieg während der Belichtung.

3. Herstellung von

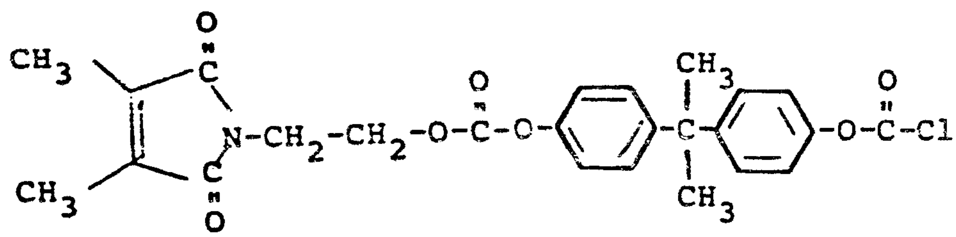

a) In einem Kolben mit Rührer, Thermometer, Tropftrichter, Destillationsbrücke und Stickstoffzuleitung werden unter Stickstoff 100 g (0,79 Mol) Dimethylmaleinsäureanhydrid in 400 g Toluol und 5 g Essigsäure gelöst und auf 100°C aufgeheizt. In diese Lösung werden 48,3 g (0,79 Mol) Ethanolamin in 192 g Methanol zugetropft und das Methanol gleichzeitig abdestilliert. Anschließend wird das Toluol abdestilliert und das Produkt im Vakuum fraktioniert.

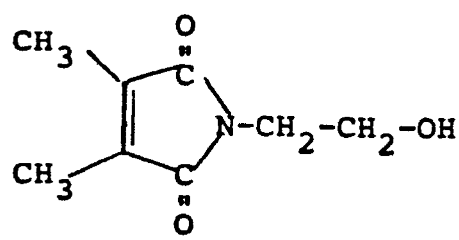

Siedepunkt bei 0,5 Torr 123°C, Auswaage 119 g (90 % der Theorie), schwach gelbes Öl (siehe DE-OS 2 934 578).

b) In eine Lösung aus 176,6 g = o,5 Mol Bisphenol-A-Bischlorkohlensäureester in 660 ml Methylenchlorid wird bei einer Temperatur von 10°C unter Kühlung eine Lösung aus 30,25 g = 0,25 Mol N,N-Dimethylanilin und

42,3 g = 0,25 Mol des oben erhaltenen Imids des Beispiels 3 a) innerhalb von einer Stunde zugetropft und dann das Gemisch eine weitere Stunde bei Raumtemperatur gerührt. Anschließend wird die organische Phase 3 x mit Eiswasser gewaschen und dann über Natriumsulfat getrocknet. Man erhält 990 g einer schwach gefärbten Lösung, die den Chlorkohlensäureester gemäß Formel (Ia) enthält.

4. Herstellung und Prüfung eines aromatischen Polycarbonates

Aus 42,0 g 2,2-Bis-(4-hydroxyphenyl)-propan (Bisphenol A) (0,184 Mol), 16 g Natriumhydroxid (0,4 Mol) und 540 ml destilliertem Wasser wird eine Lösung hergestellt. Nach Zugabe von 32 g der Lösung aus Beispiel 3 b) und 350 ml Methylenchlorid werden bei 20°C bis 25°C unter Rühren 32 g (0,32 Mol) Phosgen eingeleitet. Der pH-Wert wird während der Phosgenierung durch Zugabe von 20 ml 45 %iger wäßriger Natriumhydroxidlösung auf pH 12 gehalten. Nach beendeter Phosgenierung wird der pH-Wert durch Zugabe von weiteren 20 ml 45 %iger wäßriger Natriumhydroxidlösung auf pH 13 - 14 angehoben, 4 ml 4 %ige wäßrige Triethylaminlösung zugefügt und weitere 45 Minuten gerührt. Die obere wäßrige Phase wird abgetrennt, die organische Phase angesäuert und elektrolyt frei gewaschen.

Die Methylenchloridlösung wird eingeengt und das Produkt bei 80°C 12 Stunden im Vakuumtrockenschrank getrocknet.

Das Produkt hatte eine rel. Lösungsviskosität (gemessen wie in Beispiel 2) von 1,358.

Eine 8 %ige Lösung des Produktes in Methylenchlorid wird mit einer UV-Lampe (Typ: Philips HPK 125 W) bestrahlt und stündlich eine Probe gezogen, deren rel. Lösungsviskosität entsprechend bestimmt wurde.

| Zeit (h) | $\eta_{rel}$ |
|---|---|
| 0 | 1,358 |
| 1 | 1,430 |
| 2 | 1,529 |
| 3 | 1,630 |
| 4 | 1,744 |
| 5 | 1,843 |
| 6 | 1,860 |

Man erkennt, daß die Viskosität der Probe beim Bestrahlen in Lösung ansteigt.

Zur Prüfung des Aufbauverhaltens in der Festphase wird aus dem Polycarbonat ein ca. 0,1 mm dicker Film gegossen und mit einer Schwarzlichtlampe Typ Philips TL 6 W/08 bestrahlt. Nach verschieden langen Bestrahlungszeiten wurden folgende relative Lösungsviskositäten erhalten (gemessen wie in Beispiel 2):

| Zeit (h) | $\eta$ rel |
|---|---|
| 0 | 1,358 |
| 8 | 1,401 |
| 16 | 1,430 |
| 24 | 1,453 |
| 32 | 1,466 |
| 40 | 1,491 |
| 48 | 1,502 |

Man erkennt den deutlichen Anstieg des Molekulargewichts auch bei der Bestrahlung in der Festphase.

5. Herstellung von

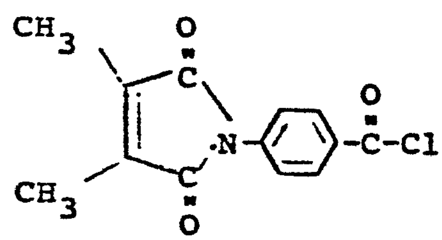

Ausgehend von 137 g (1 Mol) 4-Aminobenzoesäure und 126 g (1 Mol) Dimethylmaleinsäureanhydrid wird, wie in Beispiel 1 beschrieben, vorgegangen. Aus 98 g (0,4 Mol) der freien Säure wird, wie in Beispiel 1, mit Thionylchlorid das Säurechlorid hergestellt. Man erhält 74 g des Produktes mit einem Schmelzpunkt von 174°C.

6. Herstellung und Prüfung eines aromatischen Polycarbonates (Vergleichsbeispiel)

Ausgehend von 2,03 g (0,0077 Mol) des Kettenabbrechers aus Beispiel 5 wird, wie in Beispiel 2 beschrieben, ein

lineares Polycarbonat hergestellt. Es hatte eine relative Lösungsviskosität von 1,264 (gemessen in $CH_2Cl_2$ bei 25°C und c = 5 g/l).

Das Produkt wurde als Film mit einer Schwarzlichtlampe Typ Philips TL 6 W/08 168 Stunden lang bestrahlt. Danach wurde eine relative Lösungsviskosität von 1,278 gemessen. Das Produkt mit dieser Endgruppe hat praktisch nicht aufgebaut.

7. Bestrahlung eines erfindungsgemäßen Polycarbonats mit Licht unterschiedlicher Wellenlänge

Beispiel 2 wird mit 3,0 g (0,0113 Mol) des Kettenabbrechers aus Beispiel 1 wiederholt. Man erhält ein Polycarbonat mit einer relativen Lösungsviskosität von 1,278. Ein Film dieses Materials wird mit einer Xenon-Hochdrucklampe, Typ XBO 1600 W (Firma Osram) 24 Stunden lang unter verschiedenen Kantenfiltern belichtet. Nach dieser Zeit wurden bei den angegebenen Wellenlängen folgende Viskositäten erreicht (gemessen wie in Beispiel 2):

| Wellenlänge | $\eta$ rel | Wellenlänge | $\eta$ rel |
|---|---|---|---|
| > 320 nm | 1,423 | > 360 nm | 1,320 |
| > 345 nm | 1,475 | > 400 nm | 1,306 |

Aus diesem Beispiel ist zu ersehen, daß die erfindungsgemäßen Polymeren auch bei der Bestrahlung mit sichtbarem Licht (Wellenlängen > 400 nm) in relativ kurzer Zeit ihr Molekulargewicht deutlich erhöhen.

Beispiel 8

Herstellung von

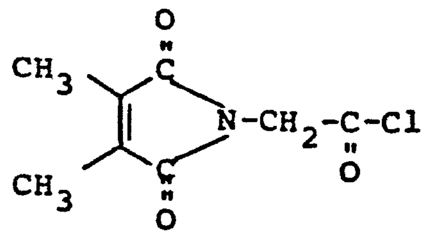

Ausgehend von 54 g (0,72 Mol) Glycin und 91 g (0,72 Mol) Dimethylmaleinsäureanhydrid und 600 ml Eisessig wurde, wie in Beispiel 1 beschrieben, vorgegangen. Ausbeute 98 g (75 % der Theorie) weiße Kristalle.

Die Umsetzung mit Thionylchlorid erfolgte ebenfalls gemäß Beispiel 1. Durch Destillieren des Rohprodukts wurden 90 g (66 % d.Th.) einer orangen Flüssigkeit erhalten (Siedepunkt bei 0,6 mbar 90,5-92°C).

Beispiel 9

Herstellung von

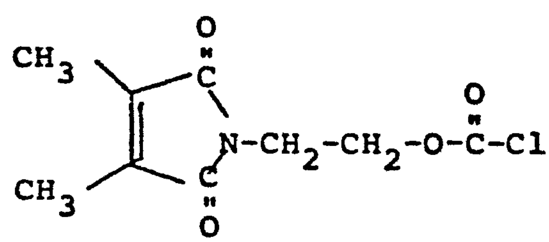

Im Dreihalskolben mit Rührer, Thermometer, Rückflußkühler und Stickstoffzuleitung, Tropftrichter und Phosgeneinleitungsrohr wurden bei -10°C in 600 ml Methylenchlorid 32 g (0,4 Mol) Pyridin vorgelegt und 19 g (0,19 Mol) Phosgen eingeleitet.

In diese Lösung wurden 10,5 g (0,06 Mol) des gelben Öls von

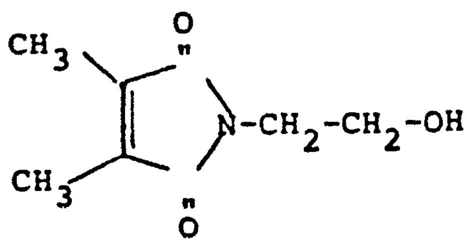

(Beispiel 3a), gelöst in 100 ml Methylenchlorid zugetropft und 1 Stunde bei 20° reagieren lassen.

Die erhaltene Lösung des Chlorkohlensäureesters ist für die erfindungsgemäße Polycarbonatherstellung nach dem Pyridinverfahren einsetzbar.

Beispiel 10

Herstellung von

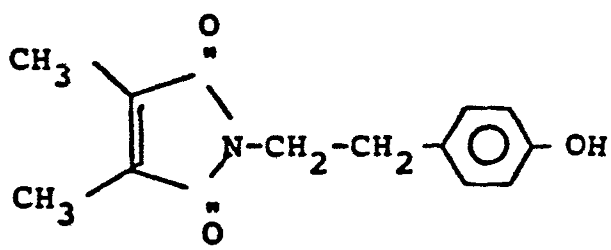

Ausgehend von 24,7 g (0,18 Mol) Tyramin, 22,7 g (0,18 Mol) Dimethylmaleinsäureanhydrid und 200 g Eisessig wird, wie in Beispiel 1 beschrieben, vorgegangen. Man erhält 16 g weiße Kristalle des Produktes mit einem Schmelzpunkt von 139-140°C. Ausbeute 36 %.

Beispiel 11

Herstellung und Prüfung eines aromatischen Polycarbonates.

Aus 45,7 g (0,2 Mol) Bisphenol A, 16 g (0,4 Mol) Natriumhydroxid und 535 ml Wasser wird eine Lösung hergestellt. Nach Zugabe von 450 ml Methylenchlorid wird eine Lösung von 1,72 g (0,007 Mol) des Imids aus Beispiel 10 in 50 ml Methylenchlorid zugegeben. Danach werden bei 20 bis 25°C unter Rühren 32 g (0,32 Mol) Phosgen eingeleitet. Der pH-Wert wird durch die Zugabe von 25 ml 45 %iger wäßriger Natronlauge auf pH 12 gehalten. Nach beendeter Phosgenierung wird der pH-Wert durch Zugabe von weiteren 20 ml der 45 %igen Natronlauge auf pH 13-14 angehoben, 4 ml wäßrige, 4 %ige Triethylaminlösung zugefügt und weitere 45 Minuten gerührt. Die untere, organische Phase wird abgetrennt, angesäuert, elektrolytfrei gewaschen und eingeengt. Nach Trocknung bei 80°C 15 h im Vakuumtrockenschrank wurde ein Produkt mit der relativen Lösungsviskosität $\eta_{rel}$ 1,308 (wie in Beispiel 2 gemessen) erhalten.

Nach 16 stündigem Bestrahlen einer 10 %igen Lösung des Polymeren in Methylenchlorid mit einer UV-Lampe (Typ: Philips HPK 125 W) war die relative Lösungsviskosität $\eta_{rel}$ auf 1.377 angestiegen.

Patentansprüche:

1. Verfahren zur Herstellung von aromatischen Polycarbonaten mit Dimethylmaleinimid-Endgruppen und mit mittleren Molekulargewichten $\bar{M}w$ (Gewichtsmittel) zwischen 2 000 und 100 000, gegebenenfalls im Gemisch mit bekannten aromatischen Polycarbonaten mit $\bar{M}w$ (Gewichtsmittel) zwischen 2 000 und 100 000, aus Diphenolen, 0,5 bis 40 Mol-%, bezogen auf Mole Diphenole, Kettenabbrechern und gegebenenfalls Verzweigern nach den bekannten Polycarbonatherstellungsmethoden des Phasengrenzflächenverfahrens oder des Verfahrens in homogener Lösung, dadurch gekennzeichnet, daß man Kettenabbrecher der Formel (I)

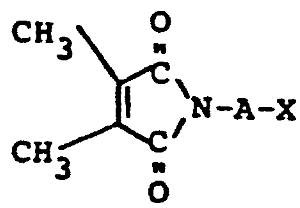

(I),

gegebenenfalls in Kombination mit maximal 3-fachen Molmengen an anderen, bekannten Kettenabbrechern, verwendet, worin die X-A-Reste X-$C_1$-$C_8$-Alkyl, X-$C_5$-$C_6$-Cycloalkyl, X-$C_7$-$C_{28}$-Aralkyl oder Reste der Formel

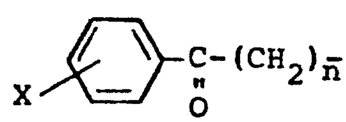

sind, worin n eine ganze Zahl von 1 bis 8 ist, und worin

X- eine funktionelle Gruppe ist, die bei der Polycarbonatherstellung nach dem Zweiphasengrenzflächenverfahren oder nach dem Verfahren in

homogener Phase als reaktiver Teil des Kettenabbrechers der Formel (I) fungiert.

2. Verfahren gemäß Anspruch 1, dadurch gekennzeichnet, daß maximal die gleiche Molmenge an anderen, bekannten Kettenabbrechern verwendet wird wie an Kettenabbrechern der Formel (I).

3. Verfahren gemäß Ansprüchen 1 und 2, dadurch gekennzeichnet, daß

X- $Cl-\overset{O}{\overset{\|}{C}}-$, $Br-\overset{O}{\overset{\|}{C}}-$, $HO-\overset{O}{\overset{\|}{C}}-$, $Cl-\overset{O}{\overset{\|}{C}}-O-$, $Br-\overset{O}{\overset{\|}{C}}-O-$ oder HO- ist.

4. Verfahren gemäß Ansprüchen 1 bis 3, dadurch gekennzeichnet, daß man unter den Polycarbonatherstellungsbedingungen cokondensierbare bifunktionelle Oligomere oder Polymere mit Molekulargewichten $\bar{M}n$ (Zahlenmittel) zwischen 500 und 10 000 in Mengen bis zu 450 Gew.-%, bezogen auf die Gewichtsmenge an eingesetzten monomeren Diphenolen, mitverwendet.

5. Aromatische Polycarbonate mit $\bar{M}w$ zwischen 2000 und 100 000 mit Endgruppen der Formel (Ib)

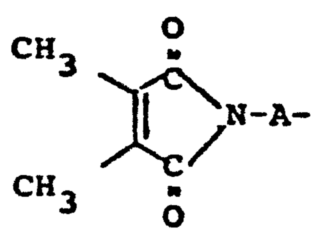

(Ib)

worin -A- die für Formel (I) in Anspruch 1 genannte

Bedeutung hat, gegebenenfalls im Gemisch mit bekannten aromatischen Polycarbonaten mit $\bar{M}_w$ zwischen 2 000 und 100 000, die aus dem Kettenabbruch mit den anderen, bekannten Kettenabbrechern resultieren, erhältlich gemäß Verfahren der Ansprüche 1 bis 4.

6. Polycarbonate mit mittleren Molekulargewichten $\bar{M}_w$ (Gewichtsmittel ermittelt durch Lichtstreuung) zwischen 2 000 und 100 000 der Formel (II)

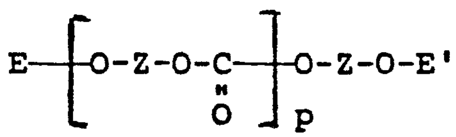

(II)

worin -O-Z-O- ein Diphenolatrest ist, E und E' gleich oder verschieden sind und wobei mindestens jeweils einer der Reste E- oder E'- einem Rest der Formel (Ic)

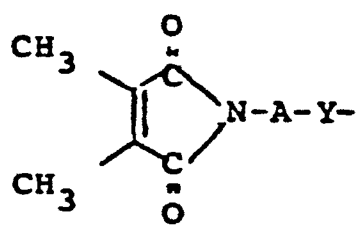

(Ic)

entspricht, worin -A- die für Formel (I) genannte Bedeutung hat und -Y- das Bindeglied ist, das aus der Reaktion der Kettenabbrecher der Formel (I), gegebenenfalls unter Einbeziehung von Phosgen, resultiert, und wobei die übrigen Endgruppen E und E' aus der Reaktion mit den anderen, bekannten Kettenabbrechern, gegebenenfalls unter Einbeziehung von Phosgen, resultieren und wobei "p" der Polymerisationsgrad ist, der aus den Molekulargewichten $\bar{M}w$ von 2 000 bis 100 000 resultiert.

7. Polycarbonate gemäß Anspruch 6, dadurch gekennzeichnet, daß

$$-Y- \quad -\overset{O}{\overset{\|}{C}}- \text{ oder } -O-\overset{O}{\overset{\|}{C}}- \text{ ist.}$$

8. Verfahren zur Modifizierung der Polycarbonate der Ansprüche 5 bis 7, dadurch gekennzeichnet, daß man diese mit ultraviolettem beziehungsweise sichtbarem Licht bestrahlt.

9. Verfahren zur Modifizierung der Polycarbonate gemäß Anspruch 8, dadurch gekennzeichnet, daß diese UV-Absorber enthalten.

10. Verfahren gemäß Ansprüche 8 und 9, dadurch gekennzeichnet, daß die Polycarbonate der natürlichen Bewitterung durch Sonnenlicht ausgesetzt werden.